# FASCICULE DE BREVET EUROPEEN

(11) **EP 1 636 299 B1**
(45) Date de publication et mention de la délivrance du brevet: **21.09.2011**
(21) Numéro de dépôt: 04729099.4
(22) Date de dépôt: 23.04.2004
(51) Int. Cl.: C08J 9/00, C08J 9/10, C08J 9/12, C08K 3/34, C08G 77/445, C01B 33/44

(54) **PROCEDE DE PREPARATION DE MOUSSES DE POLYESTER BIODEGRADABLES, MOUSSES DE POLYESTER TELLES QU’AINSI OBTENUES ET LEUR UTILISATION**
VERFAHREN ZUR HERSTELLUNG BIOLOGISCH ABBAUBARER POLYESTERSCHÄUME, HIERAUS ERHALTENE POLYESTERSCHÄUME UND DEREN VERWENDUNG
PROCESS TO PREPARE BIODEGRADABLE POLYESTER FOAMS, POLYESTER FOAMS OBTAINED THEREBY, THEIR USE, AND PROCESS TO MODIFY NANOFILLERS

(30) Priorité: 06.06.2003 EP 03076761
(43) Date de publication de la demande: 22.03.2006
(73) Titulaire: Université de Liège, 4031 Angleur (BE)
(72) Inventeur: PAGNOULLE, Christophe, B-4020 Liège (BE); STASSIN, Fabrice, B-7800 Ath (BE); CHAPELLE, Gerard, B-4920 Sougné-Remouchamps (BE); JEROME, Robert, B-4845 Jalhay (BE)
(86) Numéro de dépôt international: PCT/EP2004/004389
(87) Numéro de publication internationale: WO 2004/108806

(56) Documents cités:
- EP-A- 1 209 189
- US-A- 3 778 458
- US-A1- 2002 120 049

## Description

La présente invention est relative à un procédé de préparation de mousses de polyester biodégradables, aux mousses de polyester telles qu'ainsi obtenues ainsi qu'à leur utilisation.

Les mousses de polyester biodégradables et biocompatibles présentent des avantages d'ordre économique, environnemental et technologique indéniables, et pourraient avantageusement remplacer les mousses de polyuréthanne ou polystyrène pour des applications de commodité telles que revêtements, emballages, pots de transplantation en agriculture et analogue, ou de spécialité telles qu'implants médicaux biorésorbables, éléments d'ingénierie tissulaire et analogue.

Traditionnellement, pour fabriquer une mousse thermoplastique, un agent moussant est dissous ou mélangé dans le polymère, cet agent moussant pouvant être un agent physique, tel qu'un gaz inerte du type CO₂, N₂, ou chimique sous forme d'un additif tel que l'azodicarbonamide qui par réaction génère un gaz (N₂) dans le système. Le moussage résulte alors de l'expansion de l'agent moussant au sein de la matrice thermoplastique fondue. Il en résulte une importante déformation biaxiale de cette dernière qui, rapidement, formera de fines parois délimitant les cellules contenant le gaz. Le système à deux phases, gaz et polymère, ainsi généré est ensuite stabilisé par refroidissement et/ou cristallisation du polymère. Si la résistance à l'élongation du polymère, directement dépendante de la viscosité élongationnelle, n'est pas suffisante, le polymère fondu sera incapable de retenir le gaz expansé dans des cellules fermées et celles-ci finiront par coalescer via une rupture des parois cellulaires ou s'effondrer. Des matières thermoplastiques, comme les polyesters biodégradables, sont incapables de former une mousse stable en raison d'une rigidité à l'état fondu trop faible. On connaît par ailleurs de manière qualitative les paramètres structuraux qui permettent d'augmenter cette rigidité, tels que la masse moléculaire, le degré de branchement ou de réticulation. Dès lors, en plus de l'additif moussant, des agents chimiques précurseurs d'une réticulation (peroxydes) ou d'un greffage (agent de couplage) des chaînes polymères sont ajoutés dans le polymère fondu, en vue de modifier chimiquement sa structure et d'ajuster ainsi sa viscosité élongationnelle au moussage. Ces procédés, quoi que largement répandus, présentent de nombreux inconvénients, à savoir :
- les agents chimiques généralement utilisés tels que anhydrides, peroxydes sont toxiques et/ou présentent peu de sécurité d'emploi;
- l'optimisation du procédé de modification chimique (réticulation) des polymères dépend de facteurs cinétiques tels que la vitesse des réactions et est donc très aléatoire;
- en modifiant la structure des chaînes macromoléculaires, les propriétés physiques du polymère peuvent être altérées. A titre d'exemple, à un degré élevé de réticulation, la matrice polymère devient infusible et insoluble, ce qui rend très difficile la mise en oeuvre d'après-moussage du matériau et son recyclage éventuel.

D'autres procédés, basés sur l'utilisation de rayonnements gamma ou de faisceaux d'électrons, peuvent être mis à profit pour réticuler avant moussage le polymère et ainsi ajuster sa viscosité élongationnelle. Toutefois, l'équipement nécessaire à la réalisation de tels procédés est extrêmement coûteux.

D'autres additifs sont généralement utilisés, tels que des additifs nucléants (talc, stéarate de calcium, silice) qui facilitent la nucléation des bulles de la mousse et permettent de contrôler leur distribution, ou encore des agents chimiques utilisés pour accélérer la décomposition des agents de moussage chimiques.

Après le moussage, le gaz d'expansion peut diffuser hors des cellules avec un risque de déformation de la structure cellulaire et d'instabilité dimensionnelle du matériau expansé. Inversement, les gaz de l'atmosphère peuvent diffuser dans la mousse et conduire à l'extrême à une rupture des parois cellulaires. Des agents sensés améliorer les propriétés de barrière aux gaz de la matrice polymère sont donc généralement aussi ajoutés aux formulations de mousse. Ces additifs sont d'une manière générale des amides et esters d'acides gras, des amines aliphatiques de haut poids moléculaire, des copolymères d'éthylène et d'acide carboxylique insaturé.

Par conséquent, compte tenu du nombre élevé d'additifs mis en jeu et de leurs éventuelles interactions, les procédés de moussage actuels sont généralement complexes et difficiles à optimiser. De plus, un ou plusieurs composants des formulations de moussage sont toxiques et/ou présentent peu de sécurité à l'utilisation.

Il est également connu d'utiliser des nanocharges du type argile silicatée multicouche pour améliorer les propriétés mécaniques, thermiques et de barrière aux gaz des polymères et notamment des polyesters biodégradables. Des nanocomposites à base des polymères les plus courants ont été étudiés, voire développés à un stade industriel. Toutefois, l'extension de ce concept aux mousses de polymère n'a rencontré jusqu'ici qu'un intérêt très limité. Les fonctions de la nanocharge sont notamment de promouvoir la nucléation des cellules, d'augmenter le rendement de l'expansion (perte de gaz limitée) et d'améliorer les propriétés barrières et mécaniques du matériau final. Le rôle de la nanocharge dans le contrôle de la vitesse élongationnelle du polymère a également été mentionné. En fait, l'exfoliation, au moins partielle, d'une nanocharge du type argile silicaté multicouche au sein de la matrice de polymère permet d'augmenter sa viscosité élongationnelle. Cette propriété est critique pour la stabilisation de la structure cellulaire de la mousse. Bien que l'utilisation d'un nanocomposite physique du type polymère/nanocharge présente de nombreux avantages par rapport aux voies classiques de modification chimique du polymère telles qu'une recyclabilité, amélioration des propriétés barrières du matériau et de sa résistance à la thermooxydation, non-toxicité, sécurité d'emploi, l'incorporation de la nanocharge en tant que telle ne conduit pas à une mousse de structure homogène.

Un des buts de la présente invention consiste, par conséquent, à remédier aux inconvénients précités par la préparation d'une mousse de polyester biodégradable comprenant le mélange du polyester sous forme de masse fondue avec une nanocharge du type argile organomodifiée et la dispersion de celle-ci dans la masse fondue de polyester, et l'expansion de ladite mousse en présence d'un agent moussant de manière à former de la mousse de polyester, ainsi qu'à la mousse de polyester biodégradable ainsi préparée et à son utilisation dans la fabrication de matériaux biodégradables, non toxiques et totalement biocompatibles.

A cet effet, suivant la présente invention, on ajoute à la masse fondue de polyester, un surfactant siliconé conférant à ladite mousse une structure homogène, le surfactant siliconé étant avantageusement composé d'une composante polyester miscible avec la masse fondue de polyester et d'une composante poly(diméthylsiloxane) abaissant la tension de surface de ladite masse de polyester.

Préférentiellement, le surfactant siliconé est un polymère ou copolymère multibloc du type [poly(diméthylsiloxane-b-polyester]ₙ, un copolymère triséquencé du type polyester-b-poly(diméthylsiloxane)-b-polyester ou un mélange de ceux-ci, le symbole b signifiant bloc et n représentant un nombre entier pouvant atteindre la valeur de 1 à 10 et étant avantageusement de 2 à 5.

Suivant une forme de réalisation avantageuse de l'invention, ledit polymère ou copolymère multibloc répond à la structure [poly(ε-caprolactone)-b-poly(diméthylsiloxane)]ₙ, dans laquelle n vaut de 2 à 5.

Suivant une autre forme de réalisation avantageuse de l'invention, le copolymère triséquencé précité répond à la structure poly(ε-prolactone)-b-poly(diméthylsiloxane)-b-poly(ε-caprolactone).

D'autres détails et particularités de l'invention ressortiront de la description donnée ci-après, à titre d'exemple non limitatif, de quelques formes de réalisation particulières de l'invention.

Le procédé de préparation de mousse, suivant l'invention, consiste à faire usage d'un surfactant siliconé conférant à la mousse de polyester une structure homogène, qu'il n'a pas été possible d'obtenir jusqu'ici avec les procédés usuels avec ou sans nanocharges. Le surfactant a pour rôle d'aider au moussage, en diminuant la tension à l'interface entre le polymère et les bulles de gaz qui se développent.

Les nanocharges utilisées dans la présente invention sont du type organomodifié, c'est-à-dire des argiles résultant de l'échange de l'ion sodium présent dans la galerie séparant les feuillets de l'argile par des cations organiques du style ammonium quaternaire, sulfonium ou phosphonium. Les argiles utilisées sont en particulier des phyllosilicates comme, par exemple, la montmorillonite, la vermiculite et la kaolinite. Ces argiles ont une structure en feuillets, et contiennent par exemple entre les feuillets des cations alcalins tels que K⁺ et Na⁺ ou alcalino-terreux ou encore des cations organiques tels que des ions alkylammonium ou des ions alkylsulfonium obtenus par une réaction d'échange ionique. Les nanocharges utilisées préférentiellement dans la présente invention sont organomodifiées par des ions ammonium quaternaire du type N⁺R₁R₂R₃R₄, R₁ à R₄ étant identiques ou différents et représentant de l'hydrogène, un groupe alkyle en C₁-C₂₅ substitué ou non ou un groupe phényle substitué ou non, ou des mélanges de telles argiles. On utilisera, par exemple, des nanocharges organomodifiées par des ions diméthyldioctadécyl ammonium, des ions octadécylamine quaternisée, des ions diméthyl (2-éthylhexyl) suif hydrogéné ammonium ou par des acides aminodécanoïques. Si l'on veut favoriser l'exfoliation des plaquettes d'argile par le polymère et tirer profit au maximum de leur dimension nanoscopique, on utilisera avantageusement une argile organomodifiée par des ions ammonium quaternaire dont un ou plusieurs groupes alkyle sont fonctionnalisés par des groupes polaires et/ou réactifs du type hydroxyle, isocyanate, thiol pouvant interagir/réagir spécifiquement avec la matrice polymère. De cette façon, les feuillets de l'argile sont rendus organophiles et leur dispersion au sein du polymère, lors d'une mise en oeuvre à l'état fondu, facilitée. La modification des argiles peut être réalisée dans des solvants conventionnels, comme l'eau ou des alcools tels que le méthanol. Des nanocharges convenant particulièrement bien sont la montmorillonite modifiée par des ions diméthyl suif dihydrogéné ammonium délivrée sous la dénomination commerciale Claytone HY®, la montmorillonite modifiée par des ions diméthyl(2-éthylhexyl) suif hydrogéné délivrée sous la dénomination commerciale Cloisite 25 A® et la montmorillonite modifiée par des ions bis(hydroxyéthylméthyl) suif hydrogéné ammonium délivrée sous la dénomination commerciale Cloisite 30 B®, ainsi que leurs mélanges. Ces nanocharges sont d'une manière générale ajoutées sous forme d'une poudre extrêmement pulvérulente dispersée lors du mélange à chaud du polymère.

L'exfoliation de l'argile organomodifiée peut encore être améliorée par le greffage de courtes chaînes de polymère sur la charge. Dans ce but, l'argile est modifiée par un groupement fonctionnel susceptible d'amorcer une réaction de polymérisation. Les macromolécules sont ainsi générées in situ à partir de la charge et leur croissance provoque l'exfoliation de l'argile.

L'incorporation de l'argile organomodifiée et son exfoliation au sein de la motrice polymère donne lieu à la formation d'un nanocomposite organique/inorganique qui sera moussé. Les avantages d'un tel matériau par rapport à un composite traditionnel à base de charges microscopiques et/ou à une matrice polymère non chargée sont les suivants :
- Les plaquettes d'argile, fortement anisotropiques, vont s'orienter parallèlement à la direction de déformation biaxiale des parois cellulaires en croissance et ainsi augmenter leur viscosité élongationnelle au profit d'une stabilisation de la structure cellulaire de la mousse.
- De dimension nanométrique, ces charges devraient créer une discontinuité dans la matrice polymère et ainsi contribuer efficacement à la diffusion du gaz d'expansion des cellules vers le polymère les entourant. La phase initiale de nucléation des cellules, qui contrôle la densité ou le nombre de cellules générées au sein de la mousse sera donc favorisée en présence de ces nanocharges. On peut estimer que les nanocharges fournissent de 20 à 100 fois, en fonction de leur degré d'exfoliation, plus de sites potentiels de nucléation que les agents de nucléation standards et de dimensions supérieures. Normalement, pour un taux de nanocharges de 1 % en volume/volume, il y aura 8 x 10¹² particules ou sites potentiels de nucléation par centimètre cube, si les particules ont les dimensions suivantes : 20 x 200 x 300 nm, ce qui correspond à l'empilement d'environ 20 plaquettes. Dans le cas d'une exfoliation totale de ces dernières, ce site de nombres potentiels de nucléation par centimètre cube atteint 2 x 10¹⁴.
- Les charges inorganiques, usuelles, dont les agents de nucléation, ajoutées à la formulation peuvent affecter notamment la stabilité mécanique de la mousse en changeant les propriétés physiques de la matrice polymère. Normalement, les agents nucléants traditionnels sont connus pour favoriser la cristallisation du polymère, ce qui réduit sa résilience. Contrairement aux charges traditionnelles, les nanoparticules peuvent avoir un effet dépressif sur la cristallisation du polymère.
- L'alignement des plaquettes d'argile au sein des parois cellulaires crée une barrière physique au passage des gaz. De cette façon, le gaz de moussage est plus efficacement retenu dans les cellules, au profit de la stabilité dimensionnelle de la mousse. Cette étanchéité accrue du polymère rend possible l'utilisation de gaz d'expansion caractérisés par une grande vitesse de diffusion à travers la matrice de polymère, comme le CO₂.
- L'intégrité des chaînes de polymère constituant la matrice organique du matériau est conservée avec les facilités de mise en oeuvre et de recyclage propres aux thermoplastiques. Les propriétés de biodégradabilité et de biocompatibilité des polyesters biodégradables sont ainsi maintenues. - L'incorporation de nanocharges dans un polymère biodégradable accélère sa vitesse de décomposition.
- L'argile est naturelle, d'une toxicité nulle et d'un coût non prohibitif.
- La dispersion de silicates exfoliés dans la matrice polymère est également susceptible d'améliorer d'autres propriétés telles que les propriétés mécaniques et thermiques et même la résistance au feu du matériau.

L'incorporation d'argiles exfoliées dans le polymère, à raison d'au plus 15 %, et avantageusement de 1 à 3 % par rapport au polyester, combine par conséquent une série de fonctions habituellement assurées par une série d'additifs tels qu'agents de réticulation chimique (peroxydes), nucléants (talc), additifs pour augmenter les propriétés barrières du polymère (acides gras), charges renforçantes (billes de verre, fibres de verre).

La nanocharge du type argile organomodifiée seule ne conduit pas à l'obtention d'une mousse de structure homogène et on a constaté, d'une façon surprenante, et c'est là une caractéristique essentielle de l'invention que l'utilisation combinée de la nanocharge inorganique et d'un surfactant siliconé conférait à ladite mousse la structure homogène recherchée. Ce surfactant siliconé est en fait composé d'une composante polyester miscible avec la masse fondue de polyester et d'une composante poly(diméthylsiloxane) abaissant la tension de surface de ladite masse de polyester. Les surfactants siliconés utilisés dans le cadre du procédé de l'invention sont de deux types et sont soit des polymères ou copolymères multiblocs du type [poly(diméthylsiloxane-b-polyester]ₙ, soit des copolymères triséquencés du type polyester-b-poly(diméthylsiloxane)-b-polyester, ou encore des mélanges de ceux-ci, le symbole b signifiant bloc et n représentant un nombre entier pouvant atteindre la valeur de 1 à 10 et étant avantageusement de 2 à 5.

Les surfactants siliconés appartenant à la première classe sont préparés par couplage via des isocyanates de séquences poly(diméthylsiloxane) comportant deux bouts de chaîne de type alcool et de séquences polyester également dotées de deux bouts de chaîne de type alcool. La synthèse se réalise en fait en deux étapes, la première consistant par exemple à faire réagir l'un des polymères [par exemple de la poly(ε-caprolactone)] difonctionnel (deux groupements alcool) avec deux équivalents de toluène diisocyanate à 60°C pendant 4 heures, réalisant ainsi un couplage avec la fonction la plus réactive. La seconde étape consiste à activer par exemple par un catalyseur (dilaurate de dibutylétain en quantité catalytique) à 60°C, la fonction la moins réactive du toluène diisocyanate et incorporer ainsi en 4 heures de réaction deux équivalents du second polymère (polydiméthylsiloxane doté de deux groupes alcool). Ces blocs de polydiméthylsiloxane ont la structure chimique HO-(CH₂)ₘ[Si(CH₃)₂O]ₙSi(CH₃)₂-(CH₂)ₘOH, m pouvant avoir une valeur de 2 à 10. Des exemples de produits dans le commerce répondant à cette structure sont le Tegomer HSi 2111, le Tegomer HSi 2311 et le Tegomer HSi 2711, ces trois produits ayant les caractéristiques suivantes : groupes alcool primaire, fonctionnalité de 2, valeur de n (nombre d'unités répétitives) 10, 30 et 70, poids moléculaire approximatif (grammes/mole) : 860, 2500 et 5600.

Les copolymères triséquencés du type polyester-b-poly(diméthylsiloxane)-b-polyester appartenant à la seconde classe de surfactants siliconés sont généralement préparés par l'utilisation d'un polydiméthylsiloxane comportant deux bouts de chaîne alcool primaire en tant que macroamorceur de la polymérisation par ouverture de cycle de (di)ester cyclique, par exemple de la caprolactone, catalysée par un catalyseur approprié tel que l'octoate d'étain. Le macroamorceur polydiméthylsiloxane a d'abord été préparé par ouverture de cycle assistée par l'hydroxyde de potassium de l'hexaméthylcyclotrisiloxane suivie de l'addition de quelques unités d'oxyde d'éthylène fournissant ainsi un PDMS terminé par deux groupes carbinols ou de l'ajout de chlorodimethylsilane fournissant ainsi un PDMS terminé par 2 groupes Si-H greffés ensuite par hydrosilylation sur un alcool vinylique. Comme on l'a déjà précisé, de façon surprenante l'utilisation combinée d'une argile organomodifiée et de ce surfactant siliconé conduit à une amélioration remarquable de la structure de la mousse, par une diminution de la taille moyenne des cellules d'au moins un ordre de grandeur, les cellules sont majoritairement fermées avec une intégrité des parois cellulaires, l'état de surface (la peau) de la mousse est beaucoup plus lisse et sans craquelures apparentes, une diminution de la densité apparente de la mousse (d inférieure à 100 kg/m³) et du module de compression (matériau plus souple), en conférant ainsi à la mousse une structure essentiellement homogène.

Deux hypothèses sont avancées pour expliquer les synergies qui résultent de la combinaison d'argile organomodifiée/ surfactant siliconé :
- La croissance des cellules résulte de l'expansion du gaz moussant à laquelle s'oppose la résistance visqueuse du polymère (augmentée par l'incorporation d'argile), mais aussi sa tension de surface. En fait, le surfactant siliconé abaisse la tension de surface de la matrice de polyester via ses blocs de polydiméthylsiloxane au profit d'une plus grande stabilité des cellules vis-à-vis de la coalescence. Le surfactant siliconé serait donc à l'origine d'un contrôle thermodynamique (diminution de l'énergie du système) de la structure cellulaire, alors que l'argile aurait un effet rhéologique et donc cinétique.
- Le surfactant siliconé interviendrait dans le mécanisme d'exfoliation/intercalation de l'argile. Des interactions privilégiées entre l'argile et le surfactant existeraient. L'interface polymère/argile serait alors remplacée par une double interface plus mobile (polymère/surfactant et argile/surfactant) et mieux adaptée au moussage.

Une structure optimale du surfactant siliconé a pu être déterminée, en variant à la fois l'architecture (nombre de blocs) du polymère ou copolymère et la longueur des blocs de poly(diméthylsiloxane). La quantité en poids de surfactant siliconé en pourcentage par rapport au polyester, est de 1 à 5 %, avantageusement de 1,5 à 3 %.

Le procédé de préparation de mousses de polyester biodégradables suivant l'invention basé sur l'incorporation et la dispersion dans la matrice de polyester fondu d'argile organomodifiée du type silicate multicouche et d'un surfactant polymère siliconé peut être utilisé avec les deux types principaux d'agents moussants physiques et chimiques, selon l'application envisagée. Les agents chimiques sont des agents porogènes avantageusement sous forme de poudres qui se décomposent à des températures relativement élevées, typiquement de 170°C pour l'azodicarbonamide en présence d'un accélérateur de décomposition approprié, tel que l'oxyde de zinc et/ou le stéarate de zinc. D'autres accélérateurs de décomposition de l'azodicarbonamide sont des sels de métaux de transition tels que les sels de plomb et cadmium. On pourrait également utiliser certains polyols, alcools, amines, acides organiques et l'urée. Toutefois, à ces températures élevées, les polyesters biodégradables, en particulier la poly(ε-caprolactone), se dégradent rapidement, ce qui limite fortement l'utilisation de ce processus dans le cas des polymères thermosensibles. L'utilisation combinée de la nanocharge et du surfactant à base de polydiméthylsiloxane permet de confectionner des mousses à des températures supérieures à 170°C, sans dégradation ou jaunissement excessif du matériau, grâce à une résistance accrue du polymère à la thermooxydation. Bien qu'ils soient largement utilisés, car faciles à mettre en oeuvre, les agents chimiques présentent plusieurs inconvénients tels que la formation de résidus solides (non décomposés) et la production de gaz toxiques ou corrosifs, l'ammoniac et le monoxyde de carbone dans le cas de l'azodicarbonamide. Ce procédé basé sur l'utilisation d'un agent moussant chimique sera donc utilisé pour produire des mousses de polyester destinées à un usage courant, dont l'attribut majeur est la biodégradabilité. La quantité en poids d'agent moussant porogène, en pourcentage par rapport au polyester, est d'une façon appropriée de 5 à 20 %, et avantageusement de 10 à 15 %, la quantité en poids d'accélérateur de décomposition, en pourcentage par rapport au polyester, étant d'une façon appropriée de 1 à 10 %, et avantageusement de 3 à 5 %. Bien que l'ordre d'addition des différents composants précités ne soit pas critique, il est cependant avantageux d'ajouter la nanocharge, l'agent moussant porogène du type azodicarbonamide, l'accélérateur de décomposition et le surfactant siliconé sous la forme d'un mélange à sec, avantageusement sous forme de poudre à la masse fondue de polyester. Suivant l'invention, le surfactant siliconé est préférentiellement ajouté simultanément à la nanocharge.

Les agents moussants physiques tels que l'azote moléculaire, le dioxyde de carbone se trouvent sous forme de gaz. Ces gaz sont solubles dans la masse fondue de polyester sous haute pression. En dépressurisant le système, la nucléation et la croissance des bulles génèrent une structure cellulaire. L'utilisation de CO₂, dans son état supercritique (fluide de composition intermédiaire entre les états gazeux et liquide) présente de nombreux avantages, et notamment une non-toxicité par rapport aux agents moussants chimiques, aucun produit solide ne résidant dans la structure moussée et aucun gaz toxique n'étant produit, une sécurité, la nature inerte des gaz conférant une sécurité d'emploi, une capacité d'extraction, le gaz contribuant à améliorer le degré de pureté du polymère expansé, une propriété de solvatation pouvant être mise à profit pour incorporer des additifs tels que des agents thérapeutiques au sein de la matrice de polyester, lors de l'étape de saturation de cette dernière par le CO₂ supercritique, et un moussage à très basse température, la dissolution du CO₂ dans la matrice de polyester (avant son expansion) donnant lieu à un abaissement des températures de transition du polymère (T_{g} et Tₘ). De cette façon, le procédé au CO₂ peut être mis en oeuvre à des températures inférieures à la T_{g} ou Tₘ initiale (60°C pour la poly-caprolactone) dans le cas d'un polymère (semi-)cristallin, rendant ainsi possible le moussage de matrices thermosensibles. Dès lors, le procédé de moussage faisant appel au CO₂ est de nature à trouver des applications dans un secteur aussi important que le domaine (bio)médical.

Les mousses nanocomposites à base de polyesters biodégradables, objets de l'invention, s'inscrivent dans le contexte général des matériaux biodégradables. Outre l'amélioration des propriétés mécaniques et thermiques attendues de l'incorporation d'une nanocharge dans le polymère, le recours à une mousse d'une densité jusqu'à 20 fois inférieure à celle du polymère en masse contribue à abaisser le coût de ces polymères, tout en étendant leur champ d'applications. Normalement, ces mousses pourront être valorisées pour la fabrication de matériaux caractérisés par des "temps de vie" relativement courts et/ou utilisés dans un environnement naturel, comme par exemple les revêtements extérieurs, emballages de boissons et aliments à consommation rapide, bouteilles, couverts jetables, objets thermoformés, fibres, films, mélanges avec amidon, implants médicaux biorésorbables, pots de transplantation en agriculture, marquages et fixations de plantes, plateaux pour soins, biomatériaux, patchs résorbables. Des exemples de polyesters biodégradables sont les polymères dérivés de toute lactone (ester cyclique), tels que la poly(ε-caprolactone), et de tout diester cyclique comme les polylactides et polyglycolides, tels que le poly(acide lactique), les poly(hydroxyacides) tels que le poly(hydroxybutyrate-co-hydroxyvalérate) ainsi que les polyesters tels que le poly(butylène succinate), le poly(butylène adipate) et le poly(butylène téréphtalate) ainsi que le poly(ester amide). Ces matériaux plastiques sont généralement fournis par les fabricants sous la forme de "pellets", c'est-à-dire de granulés de polymère.

On donne ci-après des exemples de préparation de mousses composites suivant l'invention mises en oeuvre, soit par dissolution et expansion d'un agent moussant physique tel que le CO₂ supercritique, soit par décomposition thermique d'un agent porogène tel que l'azodicarbonamide, avec dans les deux cas une amélioration sensible de la structure cellulaire par rapport à des matériaux témoins sans nanocharge combinée à un surfactant siliconé.

On notera bien entendu que ces exemples sont donnés uniquement à titre illustratif et ne constituent en aucun cas une limitation au cadre de l'invention.

### Exemple comparatif 1

### Préparation de mousses de poly(ε-caprolactone) sans surfactant siliconé

Des mélanges de poly(ε-caprolactone) (d'une masse moléculaire de 50.000 g/mole), d'azodicarbonamide (ADC FC2 de Bayer) comme agent moussant, d'oxyde de zinc (ZnO 2C, de Silox) comme accélérateur de décomposition de l'azodicarbonamide et de montmorillonite modifiée par des ions diméthyl suif hydrogéné ammonium (Claytone HY®) ont été mis en oeuvre à l'aide d'un mélangeur interne du type Brabander d'une capacité de 50 cm³ à 90°C, 60 tours par minute et durant 10 minutes. La matrice de polyester a d'abord été fondue à un cisaillement modéré (25 tours par minute), avant d'y introduire un mélange à sec des différents additifs (azodicarbonamide, ZnO et Claytone HY). Ensuite, les mélanges réalisés sont amenés sous la forme de pastilles cylindriques de 25 mm x 2 mm, à l'aide d'une presse du type Fonjtijn à 90°C, sous une pression de 5 MPa et durant 5 minutes. Afin d'étudier l'effet de l'argile organomodifiée sur le comportement viscoélastique du polyester dans son état fondu, les mélanges réalisés ont été analysés, lors d'un balayage en température, à l'aide d'un rhéomètre ARES (Rheometric Scientific®). Les conditions de mesure étaient les suivantes : configuration plateau-plateau (25 mm de diamètre), fréquence d'oscillation de 1 Hz, 1 % de déformation relative, rampe de chauffe de 5°C/minute et force normale fixée à 40 g. La valeur de la tangente Delta (T_{g} Delta), c'est-à-dire le rapport entre les modules visqueux (G") et élastique (G'), a été relevée à 140°C, juste avant la décomposition de l'azodicarbonamide (ADC). De cette façon, la mesure expérimentale n'est pas perturbée par l'expansion de la mousse entre les plateaux du rhéomètre. En parallèle, les échantillons ont été moussés, de façon conventionnelle, dans une étuve à 170°C ± 1°C durant 7 minutes. La densité des échantillons expansés a été évaluée par simple pesée d'un échantillon de mousse de la forme d'un parallélépipède aux dimensions de 10 x 10 x 10 mm³ et normalisation de la valeur par rapport au volume. Le Tableau 1 donne la composition des mélanges réalisés, les valeurs expérimentales de T_{g} Delta ainsi que les densités apparentes des mousses.

**Tableau 1**

| Mousse n° | Formulation des mousses (quantités en grammes) | | | Caractérisation | |
|---|---|---|---|---|---|
| | PCL | ADC+ZnO | Claytone HY® | T_{g} Delta | Densité |
| | (g) | (g) | (g) | à 140°C | (kg/m³) |
| 1 | 40 | 6+2 | - | 20,05 | 156 |
| 2 | 40 | 6+2 | 0,75 (1,875%) | 5,37 | 133 |
| 3 | 40 | 6+2 | 1,5 (3,754 %) | 2,31 | 104 |
| 4 | 40 | 6+2 | 3 | 1,69 | 261 |
| 5 | 40 | 6+2 | 6 | 0,815 | 626 |

| | | | | | |
|---|---|---|---|---|---|
| PCL : poly(ε-caprolactone) de masse moléculaire de 50.000 g/mole (Capa, Solvay) ADC : azodicarbonamide de type ADC FC2 (Bayer) ZnO : qualité 2C (Silox) Claytone HY® : montmorillonite modifiée par des ions diméthyl suif hydrogéné ammonium (Southern Clay Products). | | | | | |

Comme on peut le voir, la valeur de T_{g} Delta diminue rapidement avec la teneur en argile (Claytone HY) du mélange, indiquant un renforcement du caractère élastique du polymère à l'état fondu (voir également la figure 1 des dessins annexés à cet égard). Un taux critique de Claytone HY (0,75-1,5 g) donne lieu à la structure cellulaire la plus homogène et aux densités les plus faibles. Ce taux optimal d'argile détermine une fenêtre de propriétés viscoélastiques du polymère adaptée au "moussage". Une quantité inférieure d'argile ne permet pas aux cellules de retenir suffisamment la pression du gaz et celles-ci finissent par coalescer et/ou s'effondrer. Par contre, en présence d'une quantité excessive de nanocharges renforçantes, la PCL est trop rigide pour permettre l'expansion des cellules [voir à ce sujet la figure 2 montrant l'influence de la teneur en argile sur la structure cellulaire des mousses de poly(ε-caprolactone) par microscopie électronique à balayage]. Si l'influence positive de la dispersion d'argile sur la moussabilité de la poly(ε-caprolactone), en corrélation avec un renforcement de la résistance à chaud du polymère, est démontrée, la taille moyenne des cellules (quelques millimètres) et l'état de surface de la mousse (peau) sont deux paramètres qui demandent à être encore améliorés.

### Exemple 2

### Préparation de surfactant siliconé

On a préparé un copolymère multibloc par couplage d'un polydiméthylsiloxane diol et d'une poly(ε-caprolactone diol) en présence de toluène diisocyanate (TDI). Le copolymère sera testé comme additif au sein des mousses nanocomposites de poly(ε-caprolactone)/argile dans l'Exemple 3. Le segment polydiméthylsiloxane (PDMS) doit assurer l'abaissement de la tension interfaciale entre le gaz produit par la décomposition de l'agent moussant et la matrice polymère, alors que la séquence poly(ε-caprolactone) (PCL) sera à même d'assurer un ancrage suffisant de l'additif dans cette matrice polymère. Le protocole de préparation de ce copolymère multibloc "PDMS/PCL" est le suivant. Dans un premier temps, les OH terminaux de la PCL (mg/mole) sont transformés en groupes isocyanate, en présence de deux équivalents de toluène diisocyanate (TDI). La réaction préférentielle du NCO en position 4 du TDI est suivie par une spectroscopie Fourier (FTIR). Après 4 heures de réaction, à 60°C et en masse, la bande d'absorption des deux NCO (environ 2.270 cm⁻¹) voit sa largeur à hauteur fortement diminuée, suite à la consommation du NCO en position 4. Parallèlement, un uréthanne est formé, ce qui donne lieu à un épaulement du côté des faibles fréquences du signal FTIR caractéristique des fonctions ester de la PCL (1.735 cm⁻¹). Le prépolymère NCO-PCL-NCO ainsi formé, est alors additionné de deux équivalents d'un homopolymère de PDMS porteur de bouts de chaîne carbinol (Tegomer 2111, polymère de la société Goldschmidt). La réaction de couplage est réalisée dans les mêmes conditions (60°C, en masse) mais en présence d'une faible quantité de dilaurate de dibutylétain comme catalyseur, le NCO du TDI en position 2 étant intrinsèquement moins réactionnel. Dès l'ajout du PDMS, le milieu réactionnel, initialement transparent, devient blanchâtre, suite à la séparation de phase entre la CPL et le PDMS. Après 4 heures de réaction, la viscosité du produit de réaction a fortement augmenté et son analyse FTIR révèle une disparition totale des groupes isocyanate.

### Exemple 3

### Préparation de mousses de poly(ε-caprolactone) avec surfactant siliconé

Les mélanges répondant aux formulations de l'Exemple 1 ont été répétés selon le même protocole expérimental, mais en présence d'une faible quantité (0,6 à 1,2 g), comme additif polymère, de surfactant siliconé composé d'une composante [poly(ε-caprolactone)] miscible au polymère et d'une composante [poly(ε-diméthylsiloxane)] de faible tension de surface. Les deux types d'additifs polymères testés étaient : i) un copolymère triséquencé de la structure poly(ε-caprolactone)-b-poly(diméthylsiloxane)-b-poly(ε-caprolactone) (délivré par la société Goldschmidt sous la dénomination commerciale Tegomer HSi 6440) et ii) le copolymère multibloc de la structure [poly(ε-caprolactone)-b-poly(diméthylsiloxane)]ₙ, n valant de 2 à 5, synthétisé dans le cadre de l'Exemple 2 ci-dessus. A titre de comparaison, un homopolymère de poly(diméthylsiloxane) (Tegomer® 2111) a été testé dans les mêmes conditions. Suite à l'ajout d'un des copolymères à la formulation, à hauteur de 0,6 ou 1,2 g, la densité de la mousse diminue et avoisine désormais les 70 kg/m³ (voir Tableau 2 ci-après). Parallèlement, la taille des cellules de la mousse diminue d'au moins un ordre de grandeur (voir figure 3). Cette diminution est proportionnelle à la quantité d'additif polymère ajouté et est plus marquée dans le cas du copolymère triséquencé sans pour autant affecter la densité apparente des mousses. De surcroît, les cellules deviennent majoritairement fermées et l'état de surface des mousses est plus régulier (peau lisse et sans craquelure apparente). Il est également important de noter que l'homopolymère de poly(diméthylsiloxane) exerce une influence négative sur la moussabilité de la PCL.

**Tableau 2 Formulation des mousses (en grammes)**

| Mousse n° | PCL (50 K) | ADC+ ZnO | Argile Claytone HY | Surfactant siliconé Tegomer HSi 6440¹⁾ | Homopolymère Tegomer 2111²⁾ | Surfactant siliconé de l'Exemple 2 | Densité |
|---|---|---|---|---|---|---|---|
| | (g) | (g) | (g) | (g) | (g) | (g) | (kg/m³) |
| 1 | 40 | 6+2 | - | - | - | - | 156 |
| 3 | 40 | 6+2 | 1,5 (3,75 %) | - | - | - | 104 |
| 6 | 40 | 6+2 | 1,5 (3,75 %) | - | 1,2 | - | 210 |
| 7 | 40 | 6+2 | 1,5 (3,75 %) | - | - | 0,6 (1,5 %) | 74 |
| 8 | 40 | 6+2 | 1,5 (3,75 %) | - | - | 1,2(3 %) | 72 |
| 9 | 40 | 6+2 | 1,5 (3,75 %) | 0,6 (1,5 %) | - | - | 75 |
| 10 | 40 | 6+2 | 1,5 (3,75 %) | 1,2(3 %) | - | - | 76 |

| | | | | | | | |
|---|---|---|---|---|---|---|---|
| 1) PCL-b-PDMS-b-PCL (6600-b-3000-b-6600) 2) HO-(CH₂)ₘ-[Si(CH₃)₂-O-]ₙ-Si(CH₃)₂-(CH₂)ₘ-OH (860 g/mole) | | | | | | | |

### Exemple 4

Des mélanges ont été réalisés selon le protocole décrit dans l'Exemple 1, mais en présence de trois types d'argile organomodifiée multicouche, à savoir :
- une montmorillonite modifiée par des ions diméthyl(2-éthylhexyl) suif hydrogéné ammonium ou Cloisite® 25 A;
- une montmorillonite modifiée par des ions bis(hydroxyéthyl méthyl) suif hydrogéné ammonium ou Cloisite® 30 B;
- une montmorillonite non modifiée ou Cloisite® Na⁺ (ou Li⁺) (Cloisite native).

Ces trois silicates diffèrent donc par la présence et la nature du substituant organique attaché au cation qui va déterminer la compatibilité de la PCL vis-à-vis de la charge et donc le degré d'exfoliation du silicate multicouche. La charge modifiée par des groupes OH en surface (Cloisite 30 B) serait à priori la mieux adaptée à sa dispersion au sein d'une matrice de PCL. En effet, les deux composants mis en présence, le polyester et l'argile inorganique, sont susceptibles d'interagir fortement par des ponts hydrogène, ou même de réagir mutuellement (transestérification).

**Tableau 3 Formulation des mousses (en grammes) (mousses n° 11, 12 et 13)**

| | |
|---|---|
| Poly(ε-caprolactone) d'une masse moléculaire annoncée de 50.000 g/mole (Capa® de Solvay) | 40 g |
| Azodicarbonamide (ADC FC2, de Bayer) | 6 g |
| ZnO 2C (Prayon-Ruppel) | 2 g |
| Cloisite® native, 25A ou 30B | (0,75 g) |
| PCL-b-PDMS-b-PCL (Tegomer® HSi 6440, de Goldschmidt) | (1,2 g) |

### Densité et structure cellulaire

L'incorporation d'argile organophile (25A et 30B) dans la matrice de polyester conduit à une diminution de la densité des mousses (voir figure 4, a). Comme attendu, l'argile du type 30B est la plus efficace, en raison d'une plus grande compatibilité charge/polymère. Dans le même sens, l'argile native, fortement incompatible vis-à-vis de la PCL, n'améliore d'aucune façon le "moussage" de la PCL et semble même l'affecter. Suite à l'utilisation de Tegomer®, on assiste à une diminution (additionnelle) de la densité des matériaux expansés. Les densités obtenues en présence ou non d'argile organophile (25A ou 30B) sont alors comparables et de l'ordre de 50 kg/m³. Cependant, l'utilisation combinée de la Cloisite® organophile et de Tegomer® conduit à une amélioration significative à la fois de la structure cellulaire (plus fine et davantage "fermée") et de l'état de surface (peau) du matériau expansé (beaucoup plus lisse).

### Propriétés viscoélastiques

En vue de mettre en évidence une influence éventuelle de la nanocharge sur le comportement viscoélastique du matériau, on a mesuré, lors d'un balayage en température, la valeur de T_{g} Delta (rapport entre les modules de perte et de conservation). La valeur expérimentale prise en compte est relevée à 140°C, c'est-à-dire avant la décomposition de l'agent moussant (figure 4, b). Suite à l'incorporation de la nanocharge dans le polymère, la T_{g} Delta passe d'environ 20 à des valeurs inférieures à 3 et à 5, en présence respectivement de Cloisite® 30B et 25A, ce qui traduit un renforcement considérable du caractère élastique du matériau. La Cloisite® Na⁺ quant à elle ne modifie pas de façon significative le comportement viscoélastique du polymère. A nouveau, cette situation traduit le degré de compatibilité nanocharge/ polymère qui déterminera le niveau d'intercalation/exfoliation de l'argile. On notera aussi que l'incorporation de Tegomer® dans le nanocomposite conduit à une légère augmentation de l'angle de phase. Cette situation pourrait indiquer l'existence d'interactions privilégiées entre l'argile et l'additif siliconé. L'interface polymère/argile serait alors remplacée par une double interface plus mobile polymère/Tegomer® et argile/Tegomer®.

### Flexibilité des mousses

Afin d'établir une corrélation éventuelle entre la structure cellulaire des mousses et leur degré de flexibilité/compressibilité, on a mesuré à l'aide du rhéomètre le module de compression des mousses réalisées. Pour ce faire, un échantillon de mousse (25 x 25 x 10 mm³) est fixé entre les plateaux inférieur (25 mm de diamètre) et supérieur (8 mm de diamètre) du rhéomètre. Le plateau de 8 mm est alors déplacé verticalement à une vitesse constante, de façon à comprimer la mousse, ce qui donne lieu à une augmentation linéaire de la force appliquée en fonction du taux de compression de la mousse. La pente de cette relation linéaire fournit, après normalisation par rapport à la section du plateau mobile, la valeur de module recherchée. Les modules expérimentaux rapportés aux figures 4 c et d montrent que les mousses les moins denses sont, de façon générale, les plus flexibles. C'est ainsi que les nanocomposites à base de Cloisite® organophile (30B et 25A) et modifiés par l'ajout de Tegomer® ont une compressibilité intermédiaire entre celles de deux matériaux de référence constitués respectivement d'une majorité de cellules fermées et ouvertes (mPE fermé et PUR ouvert). On notera également que la Cloisite® 25A donne lieu en présence de Tegomer® à une mousse de densité comparable à la Cloisite® 30B, mais beaucoup plus souple. La structure cellulaire joue ici un rôle. En effet, les cellules sont plus fermées en présence de l'argile 30B, ce qui augmente sa résistance à la compression, comme indiqué par les deux matériaux de référence.

En conclusion, la capacité de l'argile à améliorer la "moussabilité" de la PCL (densité, structure cellulaire, flexibilité, état de surface) dépend fortement de la nature de son substituant organique qui va déterminer la compatibilité du polymère vis-à-vis de la charge et donc le degré d'exfoliation du silicate multicouche. Il est donc possible d'établir une hiérarchisation des argiles testées, en fonction de leur efficacité : Cloisite Na⁺ < sans argile < Cloisite 25A < Cloisite 30B. L'utilisation combinée de Tegomer® ne change pas ce classement, mais décuple simplement l'effet de la nanocharge.

### Exemple 5

Les mélanges, dont les compositions sont rapportées dans le Tableau 4 ci-après, ont été réalisés selon le protocole expérimental décrit dans l'Exemple 1. Des pastilles cylindriques de 25 x 2 mm ont ensuite été confectionnées à partir de ces matériaux, selon la procédure classique, avant d'être moussées dans le CO₂ supercritique. Pour ce faire, une pastille de formulation donnée est introduite dans le fond de la cuve d'un réacteur haute pression. Le gaz est alors injecté dans la cuve au moyen d'une pompe seringue haute pression (modèle ISCO 260D), de façon à atteindre une pression de 60 bars. On fixe alors la température désirée (température de saturation : 40-50°C), avant de procéder à une nouvelle pressurisation du réacteur (pression de saturation : 100-200 bars). Après un temps fixé (temps de saturation), le réacteur est ramené à température ambiante et dépressurisé à une vitesse prédéterminée (temps de décompression). La mousse peut alors être récupérée et caractérisée.

**Tableau 4 Formulation des mousses (en grammes)**

| Mousse n° | Claytone HY® | Tegomer® HSi6440 | Pₛₐₜ | Tₛₐₜ | Temps de décomp. | Densité apparente | Structure cellulaire |
|---|---|---|---|---|---|---|---|
| | (g/100 g) de PCL° | (g/100g de PCL) | (bar) | (°C) | (min) | (kg/m³) | |
| 14 | 3,8 | 1,5 | 100 | 40 | 13 | 110 | Diamètre de 0,2-0,4 mm, cellules fermées, de formes régulières |
| 15 | 3,8 | 1,5 | 200 | 40 | 10,5 | 140 | Diamètre de 0,04-0,2 mm, cellules fermées, de formes régulières |
| 16 | 3,8 | 1,5 | 200 | 50 | 12 | 130 | Diamètre de 0,04-0,4 mm, distribution bimodale |
| 17 | - | - | 200 | 40 | 13,5 | 210 | Diamètre de 0,6-1,2 mm, cellules ouvertes, de formes irrégulières |

| | | | | | | | |
|---|---|---|---|---|---|---|---|
| Temps de saturation = 20 heures | | | | | | | |

Il est possible d'agir directement et sûrement à la fois sur la densité de la structure poreuse et la taille des cellules en jouant sur les paramètres physiques (Psat, Tₛₐₜ, vitesse de dépressurisation) et la formulation (Claytone® HY, Tegomer®). Le Tableau 4, rapporté ci-dessus, appelle les commentaires suivants :
- Des mousses de faible densité ont été mises en oeuvre à une température de 40°C, soit 20°C inférieurs à la température de fusion de la PCL. De la sorte, la structure cellulaire est beaucoup plus fine que celle manifestée par un matériau homologue mais préparé de façon conventionnelle à 170°C et en présence d'azodicarbonamide (ADC) tel que dans les Exemples 3 et 4 (voir figure 5).
- L'utilisation combinée d'argile (Claytone® HY) et de Tegomer® (mousses n° 15 et 17), dans des conditions de mise en oeuvre identiques, conduit à une diminution de la densité et à une amélioration de la structure cellulaire (voir figure 5 également).
- Une augmentation de la pression de saturation de 100 à 200 bars (mousses n° 14 et 15), toutes autres conditions égales, influence peu la densité apparente du matériau expansé, mais contribue à diminuer la taille des cellules; ce qui en d'autres termes traduit une nucléation plus efficace.
- Une augmentation de la température de saturation de 40 à 50°C (mousses n° 15 et 16) tend à augmenter la taille des cellules et affecte l'homogénéité de la structure cellulaire.

Outre les nombreux avantages clairement définis du procédé de préparation de mousses de polyester biodégradables de l'invention comparativement aux procédés traditionnels ou autres formulations connues, on notera que le fait de substituer à la multitude d'additifs traditionnellement utilisés dans les formulations de mousses une nanocharge organophile combinée à un additif polymère siliconé spécifique a permis de fabriquer des polymères biodégradables d'une pureté et d'une biocompatibilité qui n'avaient pas encore pu être atteintes jusqu'à présent, de qualités exigées notamment dans la fabrication des polymères de grade médical.

## Revendications

1. Procédé de préparation d'une mousse de polyester biodégradable comprenant le mélange du polyester sous forme de masse fondue avec une nanocharge du type argile organomodifiée et la dispersion de celle-ci dans la masse fondue de polyester, et l'expansion de ladite mousse de polyester ainsi obtenue en présence d'un agent moussant de manière à former de la mousse de polyester, **caractérisé en ce qu'**on ajoute à la masse fondue de polyester, un surfactant siliconé conférant à ladite mousse une structure homogène.

2. Procédé suivant la revendication 1, **caractérisé en ce que** le surfactant siliconé est ajouté simultanément à la nanocharge.

3. Procédé suivant l'une ou l'autre des revendications 1 et 2, **caractérisé en ce que** le surfactant siliconé est composé d'une composante polyester miscible avec la masse fondue de polyester et d'une composante poly(diméthylsiloxane) abaissant la tension de surface de ladite masse de polyester.

4. Procédé suivant la revendication 3, **caractérisé en ce que** le surfactant siliconé est un polymère ou copolymère multibloc du type [poly(diméthylsiloxane-b-polyester]ₙ, un copolymère triséquencé du type polyester-b-poly(diméthylsiloxane)-b-polyester ou un mélange de ceux-ci, le symbole b signifiant bloc et n représentant un nombre entier pouvant atteindre la valeur de 1 à 10 et étant avantageusement de 2 à 5.

5. Procédé suivant la revendication 4, **caractérisé en ce que** ledit polymère ou copolymère multibloc répond à la structure [poly(ε-caprolactone)-b-poly(diméthylsiloxane)]ₙ, dans laquelle n vaut de 2 à 5.

6. Procédé suivant la revendication 4, **caractérisé en ce que** le copolymère triséquencé précité répond à la structure poly(ε-caprolactone)-b-poly(diméthylsiloxane)-b-poly(ε-caprolactone).

7. Procédé suivant l'une quelconque des revendications 1 à 6, **caractérisé en ce qu'**on utilise comme agent moussant, un fluide supercritique soluble dans la masse fondue de polyester tel que du dioxyde de carbone, de l'azote moléculaire ou un mélange de ceux-ci.

8. Procédé suivant l'une quelconque des revendications 1 à 6, **caractérisé en ce qu'**on utilise comme agent moussant, un agent porogène, et avantageusement de l'azodicarbonamide, auquel cas est ajouté un accélérateur de décomposition de l'azodicarbonamide, tel que l'oxyde de zinc et/ou le stéarate de zinc.

9. Procédé suivant la revendication 8, **caractérisé en ce que** la nanocharge, l'agent moussant du type azodicarbonamide, l'accélérateur de décomposition et le surfactant siliconé sont ajoutés sous la forme d'un mélange à sec à la masse fondue de polyester précitée.

10. Procédé suivant l'une quelconque des revendications 1 à 9, **caractérisé en ce qu'**on utilise comme nanocharge, une argile organomodifiée par des ions ammonium quaternaire du type N⁺R₁R₂R₃R₄, R₁ à R₄ étant identiques ou différents et représentant de l'hydrogène, un groupe alkyle en C₁-C₂₅ substitué ou non ou un groupe phényle substitué ou non, ou un mélange de telles argiles.

11. Procédé suivant la revendication 10, **caractérisé en ce que** l'argile organomodifiée est une montmorillonite modifiée par des ions diméthyl suif dihydrogéné ammonium, des ions diméthyl(2-éthylhexyl) suif hydrogéné ammonium ou des ions bis(hydroxyéthylméthyl) suif hydrogéné ammonium, ou un mélange de celles-ci.

12. Procédé suivant la revendication 11, **caractérisé en ce qu'**on utilise en combinaison, comme nanocharge, au moins une des montmorillonites modifiées précitées et, comme surfactant siliconé, un copolymère triséquencé de la structure poly(ε-caprolactone)-b-poly-(diméthylsiloxane)-b-poly(ε-caprolactone) ou un copolymère multibloc de la structure poly(diméthylsiloxane-b-poly(ε-caprolactone)ₙ, dans laquelle n vaut de 2 à 5.

13. Procédé suivant l'une quelconque des revendications 1 à 12, **caractérisé en ce que** la quantité en poids de nanocharge, en pourcentage par rapport au polyester, est d'au plus 15 %, et avantageusement de 1 à 3 %.

14. Procédé suivant l'une quelconque des revendications 1 à 13, **caractérisé en ce que** la quantité en poids de surfactant siliconé en pourcentage par rapport au polyester, est de 1 à 5 %, avantageusement de 1,5 à 3 %.

15. Procédé suivant l'une quelconque des revendications 8 à 14, **caractérisé en ce que** la quantité en poids d'agent moussant porogène, en pourcentage par rapport au polyester, est de 5 à 20 %, et avantageusement de 10 à 15 %.

16. Procédé suivant l'une quelconque des revendications 8 à 15, **caractérisé en ce que** la quantité en poids d'accélérateur de décomposition, en pourcentage par rapport au polyester, est de 1 à 10 %, et avantageusement de 3 à 5 %.

17. Procédé suivant l'une quelconque des revendications 1 à 7, **caractérisé en ce qu'**on utilise comme agent moussant un gaz formé essentiellement de dioxyde de carbone supercritique, que l'on injecte sous pression dans le mélange précité, et on fixe la température du mélange à 40-50°C avant de procéder à une nouvelle élévation de pression entre 100 et 200 bars.

18. Procédé suivant l'une quelconque des revendications 1 à 17, **caractérisé en ce qu'**on utilise comme polyester biodégradable, une poly(ε-caprolactone), un poly(hydroxybutyrate-co-hydroxyvalérate), un poly(acide lactique), un poly(butylène succinate; adipate; ou téréphtalate), un poly(ester amide), ou un mélange d'au moins deux de ces polyesters.

19. Mousse de polyester biodégradable, telle que préparée par le procédé suivant l'une quelconque des revendications 1 à 18, présentant une structure cellulaire homogène sensiblement régulière, fine et fermée.

20. Utilisation de la mousse suivant la revendication 19 et/ou telle que préparée par le procédé suivant l'une quelconque des revendications 1 à 18, pour la fabrication de revêtements extérieurs, emballages de boissons et aliments à consommation rapide, bouteilles, couverts jetables, objets thermoformés, fibres, films, mélanges avec amidon, implants médicaux biorésorbables, pots de transplantation en agriculture, marquages et fixations de plantes, plateaux pour soins, biomatériaux, patchs résorbables.

## Claims

1. Process for the preparation of a biodegradable polyester foam comprising the blending of the polyester in the molten mass form with a nanofiller of the organomodified clay type and the dispersing of the latter in the molten polyester mass, and the expansion of the said polyester foam thus obtained in the presence of a foaming agent, so as to form the polyester foam, **characterized in that** a silicone surfactant is added to the molten polyester mass, which silicone surfactant confers a homogeneous structure on the said foam.

2. Process according to Claim 1, **characterized in that** the silicone surfactant is added simultaneously to the nanofiller.

3. Process according to either of Claims 1 and 2, **characterized in that** the silicone surfactant is composed of a polyester component which is miscible with the molten polyester mass and of a poly(dimethylsiloxane) component which lowers the surface tension of the said polyester mass.

4. Process according to Claim 3, **characterized in that** the silicone surfactant is a multiblock polymer or copolymer of the [poly(dimethylsiloxane)-b-polyester]ₙ type, a triblock copolymer of the polyester-b-poly(dimethylsiloxane)-b-polyester type or a blend of these, the symbol b indicating block and n representing an integer which can reach the value of 1 to 10 and which is advantageously from 2 to 5.

5. Process according to Claim 4, **characterized in that** the said multiblock polymer or copolymer corresponds to the [poly(ε-caprolactone)-b-poly(dimethylsiloxane)]ₙ structure, in which n has a value from 2 to 5.

6. Process according to Claim 4, **characterized in that** the abovementioned triblock copolymer corresponds to the poly(ε-caprolactone)-b-poly(dimethylsiloxane)-b-poly(ε-caprolactone) structure.

7. Process according to any one of Claims 1 to 6, **characterized in that** use is made, as foaming agent, of a supercritical fluid which is soluble in the molten polyester mass, such as carbon dioxide, molecular nitrogen or a mixture of these.

8. Process according to any one of Claims 1 to 6, **characterized in that** use is made, as foaming agent, of a pore-forming agent and advantageously of azodicarbonamide, in which case an accelerator of the decomposition of azodicarbonamide, such as zinc oxide and/or zinc stearate, is added.

9. Process according to Claim 8, **characterized in that** the nanofiller, the foaming agent of the azodicarbonamide type, the decomposition accelerator and the silicone surfactant are added in the form of a dry blend to the abovementioned molten polyester mass.

10. Process according to any one of Claims 1 to 9, **characterized in that** use is made, as nanofiller, of a clay organomodified by quaternary ammonium ions of the N⁺R₁R₂R₃R₄ type, R₁ to R₄ being identical or different and representing hydrogen, a substituted or unsubstituted C₁-C₂₅ alkyl group or a substituted or unsubstituted phenyl group, or a mixture of such clays.

11. Process according to Claim 10, **characterized in that** the organomodified clay is a montmorillonite modified by dihydrogenated tallow dimethyl ammonium ions, hydrogenated tallow dimethyl 2-ethylhexyl ammonium ions or hydrogenated tallow bis(hydroxyethyl) methyl ammonium ions, or a mixture of these.

12. Process according to Claim 11, **characterized in that** use is made in combination, as nanofiller, of at least one of the abovementioned modified montmorillonites and, as silicone surfactant, of a triblock copolymer of the poly(ε-caprolactone)-b-poly(dimethylsiloxane)-b-poly(ε-caprolactone) structure or a multiblock copolymer of the poly(dimethylsiloxane)-b-poly(ε-caprolactone)ₙ structure, in which n has a value from 2 to 5.

13. Process according to any one of Claims 1 to 12, **characterized in that** the amount by weight of nanofiller, as percentage with respect to the polyester, is at most 15% and advantageously from 1 to 3%.

14. Process according to any one of Claims 1 to 13, **characterized in that** the amount by weight of silicone surfactant, as percentage with respect to the polyester, is from 1 to 5% and advantageously from 1.5 to 3%.

15. Process according to any one of Claims 8 to 14, **characterized in that** the amount by weight of pore-forming foaming agent, as percentage with respect to the polyester, is from 5 to 20% and advantageously from 10 to 15%.

16. Process according to any one of Claims 8 to 15, **characterized in that** the amount by weight of decomposition accelerator, as percentage with respect to the polyester, is from 1 to 10% and advantageously from 3 to 5%.

17. Process according to any one of Claims 1 to 7, **characterized in that** use is made, as foaming agent, of a gas formed essentially of supercritical carbon dioxide, which is injected under pressure into the abovementioned blend, and the temperature of the blend is set at 40-50°C before carrying out a further rise in pressure between 100 and 200 bar.

18. Process according to any one of Claims 1 to 17, **characterized in that** use is made, as biodegradable polyester, of a poly(ε-caprolactone), a poly(hydroxybutyrate-co-hydroxyvalerate), a poly(lactic acid), a poly(butylene succinate, adipate or terephthalate), a poly(ester-amide), or a blend of at least two of these polyesters.

19. Biodegradable polyester foam, as prepared by the process according to any one of Claims 1 to 18, exhibiting a homogeneous cellular structure which is substantially uniform, fine and closed.

20. Use of the foam according to Claim 19 and/or as prepared by the process according to any one of Claims 1 to 18 in the manufacture of exterior coatings, packagings for fast drinks and foods, bottles, disposable cutlery, thermoformed objects, fibres, films, blends with starch, bioresorbable medical implants, pots for transplanting in agriculture, markings and fixations for plants, care trays, biomaterials or resorbable patches.

## Patentansprüche

1. Verfahren zur Herstellung eines biologisch abbaubaren Polyesterschaumstoffs, bei dem man den Polyester in Form einer schmelzflüssigen Masse mit einem Nanofüllstoff vom Typ organisch modifizierter Ton vermischt, diesen in der schmelzflüssigen Polyestermasse dispergiert und den so erhaltenen Polyesterschaumstoff in Gegenwart eines Treibmittels so expandiert, daß sich ein Polyesterschaumstoff bildet, **dadurch gekennzeichnet, daß** man der schmelzflüssigen Polyestermasse ein Silikontensid, das dem Schaumstoff eine homogene Struktur verleiht, zusetzt.

2. Verfahren nach Anspruch 1, **dadurch gekennzeichnet, daß** man das Silikontensid gleichzeitig mit dem Nanofüllstoff zusetzt.

3. Verfahren nach einem der Ansprüche 1 und 2, **dadurch gekennzeichnet, daß** sich das Silikontensid aus einer mit der schmelzflüssigen Polyestermasse mischbaren Polyesterkomponente und einer die Oberflächenspannung der Polyestermasse herabsetzende Poly(dimethylsiloxan)-Komponente zusammensetzt.

4. Verfahren nach Anspruch 3, **dadurch gekennzeichnet, daß** es sich bei dem Silikontensid um ein Polymer oder Copolymer mit mehreren Blöcken vom Typ [Poly(dimethylsiloxan-b-polyester]ₙ, ein Dreiblockcopolymer vom Typ Polyester-b-poly(dimethylsiloxan)-b-polyester oder eine Mischung davon handelt, wobei das Symbol b für Block steht und n für eine ganze Zahl mit einem Wert von 1 bis 10 und vorteilhafterweise 2 bis 5 steht.

5. Verfahren nach Anspruch 4, **dadurch gekennzeichnet, daß** das Polymer oder Copolymer mit mehreren Blöcken der Struktur [Poly(ε-caprolacton)-b-poly(dimethylsiloxan)]ₙ, worin n einen Wert von 2 bis 5 hat, entspricht.

6. Verfahren nach Anspruch 4, **dadurch gekennzeichnet, daß** das obige Dreiblockcopolymer der Struktur Poly(ε-caprolacton)-b-poly-(dimethylsiloxan)-b-poly(ε-caprolacton) entspricht.

7. Verfahren nach einem der Ansprüche 1 bis 6, **dadurch gekennzeichnet, daß** man als Treibmittel ein in der schmelzflüssigen Polyestermasse lösliches überkritisches Fluid wie Kohlendioxid, molekularen Stickstoff oder eine Mischung davon verwendet.

8. Verfahren nach einem der Ansprüche 1 bis 6, **dadurch gekennzeichnet, daß** man als Treibmittel einen Porenbildner und vorteilhafterweise Azodicarbonamid verwendet, wobei man in letzterem Fall einen Beschleuniger der Zersetzung von Azodicarbonamid wie Zinkoxid und/oder Zinkstearat zusetzt.

9. Verfahren nach Anspruch 8, **dadurch gekennzeichnet, daß** man den Nanofüllstoff, das Treibmittel vom Typ Azodicarbonamid, den Zersetzungsbeschleuniger und das Silikontensid in Form einer trockenen Mischung zu der oben erwähnten schmelzflüssigen Polyestermasse gibt.

10. Verfahren nach einem der Ansprüche 1 bis 9, **dadurch gekennzeichnet, daß** man als Nanofüllstoff einen Ton, der mit quaternären Ammoniumionen vom Typ N⁺R₁R₂R₃R₄, wobei R₁ bis R₄ gleich oder verschieden sind und für Wasserstoff, eine gegebenenfalls substituierte C₁-C₂₅-Alkylgruppe oder eine gegebenenfalls substituierte Phenylgruppe organisch modifiziert ist, oder eine Mischung derartiger Tone verwendet.

11. Verfahren nach Anspruch 10, **dadurch gekennzeichnet, daß** es sich bei dem organisch modifizierten Ton um einen Montmorillonit, der durch Dimethyldi(hydrierter Talg)ammoniumionen, Dimethyl(2-ethylhexyl)(hydrierter Talg)ammoniumionen oder Bis-(hydroxyethylmethyl)(hydrierter Talg)ammoniumionen oder eine Mischung davon modifiziert ist, handelt.

12. Verfahren nach Anspruch 11, **dadurch gekennzeichnet, daß** man in Kombination als Nanofüllstoff mindestens einen der oben aufgefohrten modifizierten Montmorillonite und als Silikontensid ein Dreiblockcopolymer der Struktur Poly(ε-caprolacton)-b-poly-(dimethylsiloxan)-b-poly(ε-caprolacton) oder ein Copolymer mit mehreren Blöcken der Struktur Poly(dimethylsiloxan)-b-poly(ε-caprolacton)", worin n einen Wert von 2 bis 5 hat, verwendet.

13. Verfahren nach einem der Ansprüche 1 bis 12, **dadurch gekennzeichnet, daß** die Gewichtsmenge an Nanofüllstoff in Prozent, bezogen auf den Polyester, höchstens 15% und vorteilhafterweise 1 bis 3% beträgt.

14. Verfahren nach einem der Ansprüche 1 bis 13, **dadurch gekennzeichnet, daß** die Gewichtsmenge an Silikontensid in Prozent, bezogen auf den Polyester, 1 bis 5% und vorteilhafterweise 1, 5 bis 3% beträgt.

15. Verfahren nach einem der Ansprüche 8 bis 14, **dadurch gekennzeichnet, daß** die Gewichtsmenge an porenbildendem Treibmittel in Prozent, bezogen auf den Polyester, 5 bis 20% und vorteilhafterweise 10 bis 15% beträgt.

16. Verfahren nach einem der Ansprüche 8 bis 15, **dadurch gekennzeichnet, daß** die Gewichtsmenge an Zersetzungsbescttleuniger in Prozent, bezogen auf den Polyester, 1 bis 10% und vorteilhafterweise 3 bis 5% beträgt.

17. Verfahren nach einem der Ansprüche 1 bis 7, **dadurch gekennzeichnet, daß** man als Treibmittel ein im wesentlichen aus überkritischem Kohlendioxid gebildetes Gas, das man unter Druck in die oben erwähnte Mischung injiziert, verwendet und die Temperatur der Mischung vor einer erneuten Erhöhung des Drucks auf einen Wert zwischen 100 und 200 bar auf 40-50°C einstellt.

18. Verfahren nach einem der Ansprüche 1 bis 17, **dadurch gekennzeichnet, daß** man als biologisch abbaubaren Polyester ein Poly(ε-caprolacton), ein Poly(hydroxybutyrat-co-hydroxyvalerat), eine Poly(milchsäure), ein Poly(butylensuccinat; -adipat oder - terephthalat), ein Poly(esteramid) oder eine Mischung von mindestens zwei dieser Polyester verwendet.

19. Biologisch abbaubarer Polyesterschaumstoff, hergestellt gemäß dem Verfahren nach einem der Ansprüche 1 bis 18 mit einer weitgehend regelmäßigen, feinen und geschlossenen homogenen Zellstruktur.

20. Verwendung des Schaumstoffs nach Anspruch 19 und/oder des gemäß dem Verfahren nach einem der Ansprüche 1 bis 18 hergestellten Schaumstoffs zur Herstellung von Außenbeschichtungen, Verpackungen für Getränke und Fast Food, Flaschen, Einwegbesteck, thermogeformten Gegenständen, Fasern, Filmen, Mischungen mit Stärke, bioresorbierbaren medizinischen Implantaten, Umpflanztöpfen für den Ackerbau, Markierungen und Befestigungen für Pflanzen, Pflegetabletts, Biomaterialien und resorbierbaren Pflastern.
